# EUROPEAN PATENT SPECIFICATION

(11) **EP 3 531 009 B1**
(45) Date of publication and mention of the grant of the patent: **24.03.2021**
(21) Application number: 17862652.9
(22) Date of filing: 25.09.2017
(51) Int. Cl.: B62J 6/00, B62J 6/02

(54) **LIGHTING DEVICE FOR VEHICLE**
BELEUCHTUNGSVORRICHTUNG FÜR FAHRZEUG
DISPOSITIF D'ÉCLAIRAGE POUR VÉHICULE

(30) Priority: 19.10.2016 CN 201610911159
(43) Date of publication of application: 28.08.2019
(73) Proprietor: Honda Motor Co., Ltd., Tokyo 107-8556 (JP)
(72) Inventor: HUAN, Mei, Shanghai 201611 (CN); ZHOU, Fang, Shanghai 201611 (CN)
(74) Representative: Dehns
(86) International application number: PCT/JP2017/034484
(87) International publication number: WO 2018/074147

(56) References cited:
- EP-A1- 3 000 699
- EP-A1- 3 300 996
- EP-A2- 3 067 235
- JP-A- 2009 234 479
- JP-A- 2009 234 479
- JP-A- 2012 243 452
- JP-A- 2016 064 805

## Description

### [Technical Field]

The present invention relates to a lighting device for a vehicle and, more particularly, to a lighting device for a vehicle including a combination of a headlight, a position light and a flasher light.

### [Background Art]

In lighting devices mounted to a front portion of a vehicle, a structure is previously known, in which a headlight and a position light are accommodated in a single housing, the headlight includes a low beam headlight and a high beam headlight which use reflectors for forward reflection of illumination light from light sources, and the position light emits light in a band-shaped manner.

Patent Literature 1 discloses a lighting device for a vehicle, the lighting device being equipped with a pair of left and right headlights and a pair of left and right position lights. Each of the headlights includes a low-beam reflector and a high-beam reflector which are arranged vertically adjacent to each other. Each of the position lights emits light in a band-shaped range throughout from an outer edge in a vehicle-width direction of the corresponding headlight to a lower edge.

EP 3000699, which shows all the features of the preamble of independent claim 1, discloses a lighting device for a saddle-riding type vehicle in which the headlamp and the left and right lamps are arranged so that they can be easily differentiated from each other.

### [Prior Art Document]

### [Patent Document]

[Patent Document 1] JP 2014-216150 A

### [Summary of the Invention]

### [Problem to be Solved by the Invention]

Aside from this, lights as the lighting device mounted to the front portion of the vehicle include a flasher light as a direction indicator, in addition to the headlight and the position light. The lighting device described in Patent Literature 1 produces the effect of the outline of the headlight being emphasized by the position light emitting light in a band-shaped range, but no consideration is given to an improvement in conspicuity of the overall lighting device and an improvement in performance of illuminating an area ahead of the vehicle by additionally combining a flasher light.

It is an object of the present invention to provide a lighting device for a vehicle in which the conspicuity of the entire lighting device and the performance for illuminating an area ahead of the vehicle are further improved by contriving how to select shapes and combinations of a plurality of lights in order to address the above conventional technical problem.

### [Solution to Problems]

To achieve the afore-mentioned object, the present invention has a first feature in that a lighting device for a vehicle, comprising: a pair of left and right headlights (H) placed on a front portion of a vehicle (1); a pair of left and right position lights (P) placed on the front portion of the vehicle (1), the position lights (P) being situated underneath the headlights (H); and a pair of left and right flasher lights (F) placed on the front portion of the vehicle (1), the flasher lights (F) being situated underneath the position lights (P), wherein the headlights (H) and the position lights (P) are placed to overlap each other in a vehicle width direction as viewed in a front view of the vehicle, and the position lights (P) and the flasher lights (F) are placed to overlap each other in the vehicle width direction as viewed in a front view of the vehicle, and wherein the pair of left and right flasher lights (F) are placed in outward lower portions of the lighting device in the vehicle width direction, so that when the vehicle is seen from the front of the vehicle and the sides of the vehicle, light-emission surfaces of the headlights (H) and the position lights (P) and light-emission surfaces of the flasher lights (F) are continuously formed.

The present invention has a second feature in that the flasher lights (F) are placed to overlap, in the vehicle width direction, a part of a front fender (13) as viewed in a front view of the vehicle, the front fender (13) covering a front wheel (WF) of the vehicle (1).

The present invention has a third feature in that each of the position lights (P) includes an inner lens (53) serving as a light emission surface, the inner lens (53) being formed in an approximate L shape, the inner lens (53) being formed so that one end of a band-shaped upper long-length portion (53a) and one end of a band-shaped lower long-length portion (53c) are coupled at a bend portion (53b), the lower long-length portion (53c) is inclined downward toward the outside in the vehicle width direction as viewed in a front view of the vehicle, and each of the flasher lights (F) has a portion placed on an extension line (L) extending along a longitudinal direction of the lower long-length portion (53c).

The present invention has a fourth feature in that the headlights (H) are housed in a single housing (40), and the headlights (H) are arranged side by side in the vehicle width direction to create spacing between the headlights (H) and the spacing is covered with a front cowl (12) serving as an exterior component of the vehicle (1).

The present invention has a fifth feature in that each of the headlights (H) has a low-beam reflector (58) on a vehicle upper side and a high-beam reflector (59) on a vehicle lower side, and the low-beam reflector (58) is placed to overlap a part of the position light (P) in the vehicle width direction as viewed in the front side of the vehicle.

The present invention has a sixth feature in that the upper long-length portion (53a) of the position light (P) extends from at least an upper end of the high-beam reflector (59) to a lower end along an edge of the high-beam reflector (59) as viewed in the front side of the vehicle.

The present invention has a seventh feature in that the lower long-length portion (53c) of the position light (P) extends to a more inward position in the vehicle width direction than a high-beam light source (71) from which illumination light emitted is reflected off the high-beam reflector (59).

### [Effects of the Invention]

According to the first feature, lighting device for a vehicle, comprising: a pair of left and right headlights (H) placed on a front portion of a vehicle (1); a pair of left and right position lights (P) placed on the front portion of the vehicle (1), the position lights (P) being situated underneath the headlights (H); and a pair of left and right flasher lights (F) placed on the front portion of the vehicle (1), the flasher lights (F) being situated underneath the position lights (P), wherein the headlights (H) and the position lights (P) are placed to overlap each other in a vehicle width direction as viewed in a front view of the vehicle, and the position lights (P) and the flasher lights (F) are placed to overlap each other in the vehicle width direction as viewed in a front view of the vehicle. Therefore, the lighting device can be provided to produce integral light emission through a long range extending in the up-and-down direction of the vehicle when the headlights, the position lights and the flasher light are turned on. This makes it possible to enhance the visual effects produced by the new radical design and also to improve the conspicuity of the vehicle.

According to the second feature, the flasher lights (F) are placed to overlap, in the vehicle width direction, a part of a front fender (13) as viewed in a front view of the vehicle, the front fender (13) covering a front wheel (WF) of the vehicle (1). Therefore, it is possible to provide the lighting device producing integral light emission through a long range throughout from the vehicle's top end to the vehicle's bottom end overlapping the front fender, when each light is turned on.

According to the third feature, each of the position lights (P) includes an inner lens (53) serving as a light emission surface, the inner lens (53) being formed in an approximate L shape, the inner lens (53) being formed so that one end of a band-shaped upper long-length portion (53a) and one end of a band-shaped lower long-length portion (53c) are coupled at a bend portion (53b), the lower long-length portion (53c) is inclined downward toward the outside in the vehicle width direction as viewed in a front view of the vehicle, and each of the flasher lights (F) has a portion placed on an extension line (L) extending along a longitudinal direction of the lower long-length portion (53c). Therefore, it is possible to provide the lighting device radically designed to have the light-emission surfaces continuously extending throughout from the lower long-length portions of the position lights to the flasher lights.

According to the fourth feature, the headlights (H) are housed in a single housing (40), and the headlights (H) are arranged side by side in the vehicle width direction to create spacing between the headlights (H) and the spacing is covered with a front cowl (12) serving as an exterior component of the vehicle (1). Therefore, the left and right headlights visually appear to be separated from each other by the front cowl. This makes it possible to provide an outward appearance as if the housing accommodating the headlights is configured as individually independent left and right housings. As a result, quality outward appearance can be given to the front of the vehicle without increases of the component count and the number of man-hours needed for assembly.

According to the fifth feature, each of the headlights (H) has a low-beam reflector (58) on a vehicle upper side and a high-beam reflector (59) on a vehicle lower side, and the low-beam reflector (58) is placed to overlap a part of the position light (P) in the vehicle width direction as viewed in the front side of the vehicle. Therefore, even when the low beam headlights are turned on and the high beam headlights are turned off, the light-emission surfaces of the low beam headlights and the light-emission surfaces of the position lights are continuously formed, and therefore improved conspicuity of the lighting device can be achieved.

According to the sixth feature, the upper long-length portion (53a) of the position light (P) extends from at least an upper end of the high-beam reflector (59) to a lower end along an edge of the high-beam reflector (59) as viewed in the front side of the vehicle. Therefore, even when the high beam headlights are turned off, light emission by the position lights is also provided through an area along the edges of the high-beam reflectors. This makes it possible to further improve the conspicuity of the lighting device.

According to the seventh feature, the lower long-length portion (53c) of the position light (P) extends to a more inward position in the vehicle width direction than a high-beam light source (71) from which illumination light emitted is reflected off the high-beam reflector (59). Therefore, even when the high beam headlights are turned off, the lower long-length portions of the position lights cause a light emission range to be widen to the more inward positions in the vehicle width direction than the high-beam light sources. This makes it possible to improve the conspicuity of the vehicle.

### [Brief Description of Drawings]

Fig 1 is a left side view of a motorcycle to which a lighting device for a vehicle in accordance with the embodiment is applied.
Fig 2 is a partially enlarged left side view of the motorcycle.
Fig 3 is an enlarged front view of a part of the motorcycle.
Fig 4 is a front view of the headlight unit.
Fig 5 is a left side view of the headlight unit.
Fig 6 is a top view of the headlight unit.
Fig 7 is a back view of the headlight unit.
Fig 8 is a left side view of the left flasher light unit.
Fig 9 is a left side view of the state shown in Fig. 8 from which a flasher-light outer lens is removed.
Fig 10 is a front view of the state shown in Fig. 4 from which the outer lens is removed.
Fig 11 is a perspective view of the headlight unit from which the outer lens and the extension member are removed.
Fig 12 is a left side view of the state shown in Fig. 11.
Fig 13 is a perspective view of the heatsink.
Fig 14 is a bottom view of the heatsink.
Fig 15 is a front view of the state shown in Fig. 11 from which the housing is removed.
Fig 16 is a back view of the state shown in Fig. 13.
Fig 17 is a left side view of the state shown in Fig. 15.
Fig 18 is a top view of the state shown in Fig. 15.
Fig 19 is a sectional view taken along XIX-XIX line of Fig. 4.
Fig 20 is a sectional view taken along XX-XX line of Fig. 3.
Fig 21 is a sectional view taken along XXI-XXI line of Fig. 3.
Fig 22 is a sectional view taken along XXII-XXII line in Fig. 3 (Fig. 16).
Fig 23 is a sectional view taken along XXIII-XXIII line of Fig. 3.
Fig 24 is a sectional view taken along XXIV-XXIV line of Fig. 3.

### [Mode for Carrying Out the Invention]

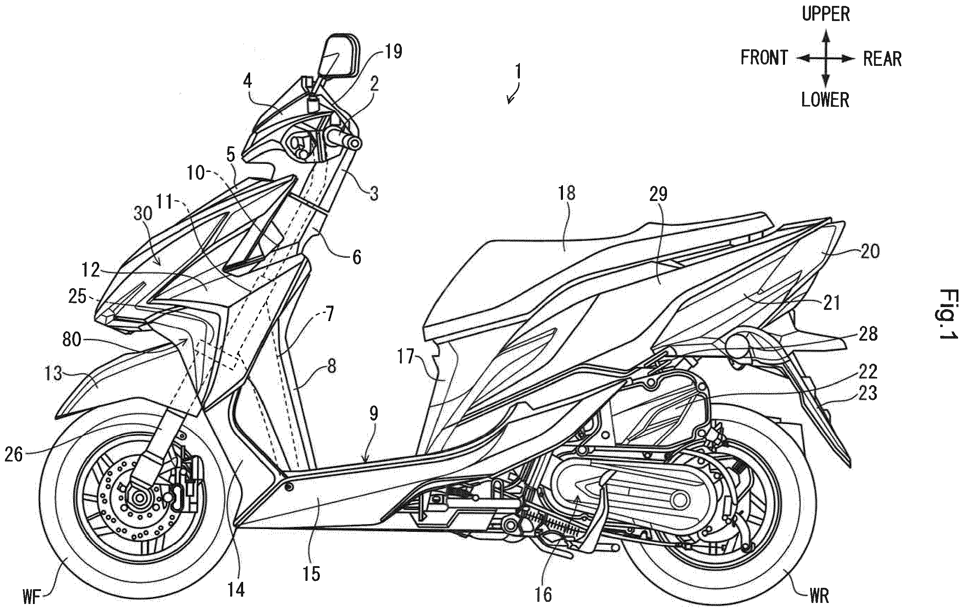

Preferable embodiments in accordance with the present invention will now be described in detail with reference to the accompanying drawings. Fig. 1 is a left side view of a motorcycle 1 to which a lighting device for a vehicle in accordance with the embodiment is applied. The motorcycle 1 is a scooter-type saddled vehicle provided with a low floor 9 between a steering handlebar 2 and a seat 18 so that a rider puts his/her feet on the low floor 9. A head pipe 11 is secured to a front end of a body frame 7, the head pipe 11 pivotably supports a steering stem 10 in a rotatable manner, and the steering stem 10 is coupled to a lower portion of the steering handlebar 2. A pair of left and right front forks 26 is secured to a lower portion of the steering stem 10 through a bottom bridge 25. The front forks 26 pivotably support a front wheel WF in a rotatable manner.

The front and rear sides of the steering handlebar 2 are covered with a front handlebar cowl 4 and a rear handlebar cowl 3, and the front and rear handlebar cowls 3 and 4 support a meter device 19. For the front and rear sides of the head pipe 11 and steering stem 10, further, the front side is covered with a front cowl 12 and a front center cover 5, and the rear side is covered with a rear upper cover 6 and a rear under cover 8. A front fender 13 is attached to the front forks 26 to cover above the front wheel WF.

A headlight unit 30 of a laterally symmetrical shape is exposed outward from an opening formed in the front cowl 12. A pair of left and right flasher light units 80 is provided such that the flasher light units 80 are arranged respectively at the left and right lower ends of the headlight unit 30.

A pair of left and light under cowls 15 is provided and both ends of the low floor 9 in the vehicle width direction are coupled to the left and right under cowls 15. A pair of left and right front side covers 14 is coupled to a lower end of the front cowl 12 and the vehicle's front ends of the under cowls 15 are coupled to lower ends of the respective front side covers 14. In the embodiment, the headlight unit 30 and the left and right flasher light units 80 are mounted to the front of the vehicle body, and the headlight unit 30 and the flasher light units 80 are collectively referred to as a "lighting device for a vehicle".

A seat cowl 29 covers under the seat 18. In a location rearward of the low floor 9, a unit-swing type power unit 16 is pivotally supported in a swingable manner, and the unit-swing type power unit 16 includes a transmission and an engine as a drive source which are configured to be integrated. The power unit 16 pivotally supports a rear wheel WR as a drive wheel in a rotatable manner. The power unit 16 has a rear end suspended from the vehicle body by a rear cushion 28. An air cleaner box 22 is mounted to an upper portion of the power unit 16. A rear combination light 20 is mounted to a rear end of the seat cowl 29. The rear combination light 20 includes rear flasher lights configured integrally on the left and right sides of a tail light and a stop light. A rear fender 23 is placed downward of the rear combination light 20.

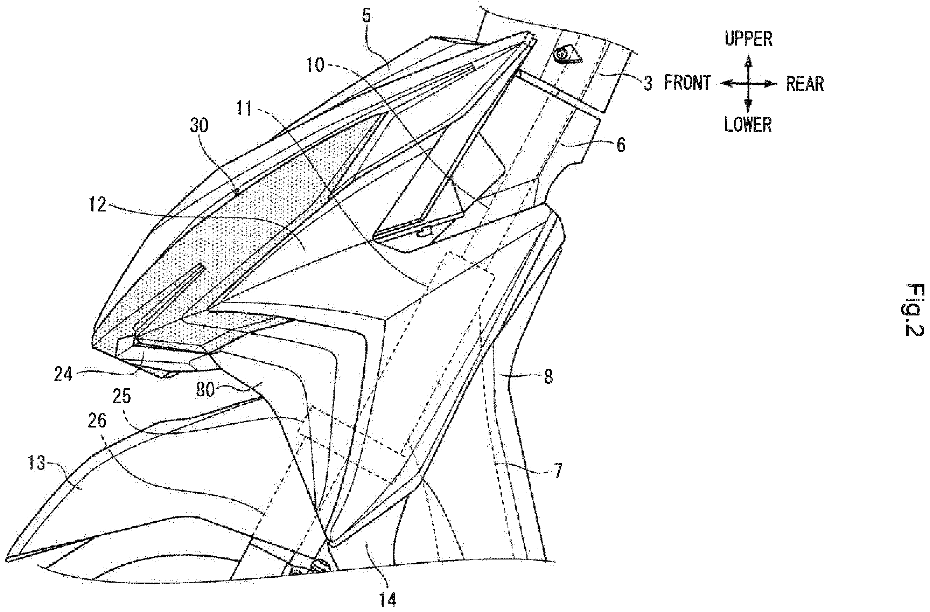

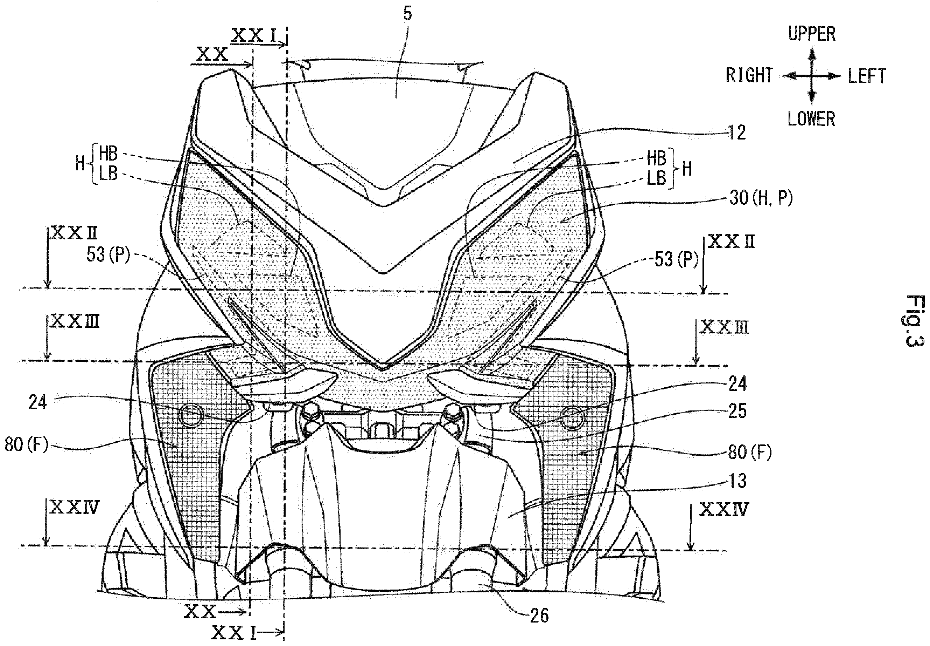

Fig. 2 is a partially enlarged left side view of the motorcycle 1. Also, Fig. 3 is an enlarged front view of a part of the motorcycle 1. The headlight unit 30 is a lighting device including a single outer lens placed onto a single housing, and the headlight unit 30 has an exposed surface (illustrated as a stippled portion) formed in an approximate V shape as viewed in the front view of the vehicle. The headlight unit 30 includes headlights H and position lights P. The headlights H have a pair of left and right low beam headlights LB and a pair of left and right high beam headlights HB, in which illumination light from LED light sources is reflected toward an area ahead of the vehicle. The position lights P include a pair of left and right inner lenses 53 as the light-emission surfaces.

A central portion of the headlight unit 30 in the vehicle width direction is covered with the front cowl 12 of an approximate V shape. This provides an outward appearance as if the left and right headlights H are configured as individually independent light elements. An upper portion of the front cowl 12 is coupled to a front center cover 5. The front center cover 5 has a lower edge formed in an approximately V shape. The front center cover 5 covers the front of the steering stem 10.

A pair of left and right flasher light units 80 (flasher lights F) is provided and the left and right flasher light units 80 are placed in outward lower portions of the headlight unit 30 in the vehicle width direction. Thus, when the vehicle is seen from the front of the vehicle and the sides of the vehicle, the light-emission surfaces of the headlights H and the position lights P and the light-emission surfaces of the flasher lights F are continuously formed. A pair of left and right decorative members 24 is attached to a lower portion of the headlight unit 30 to present a new radically designed outline with a plurality of sharp-edged portions onto the exposed surface of the headlight unit 30. The decorative members 24 are formed of colored resin and/or the like.

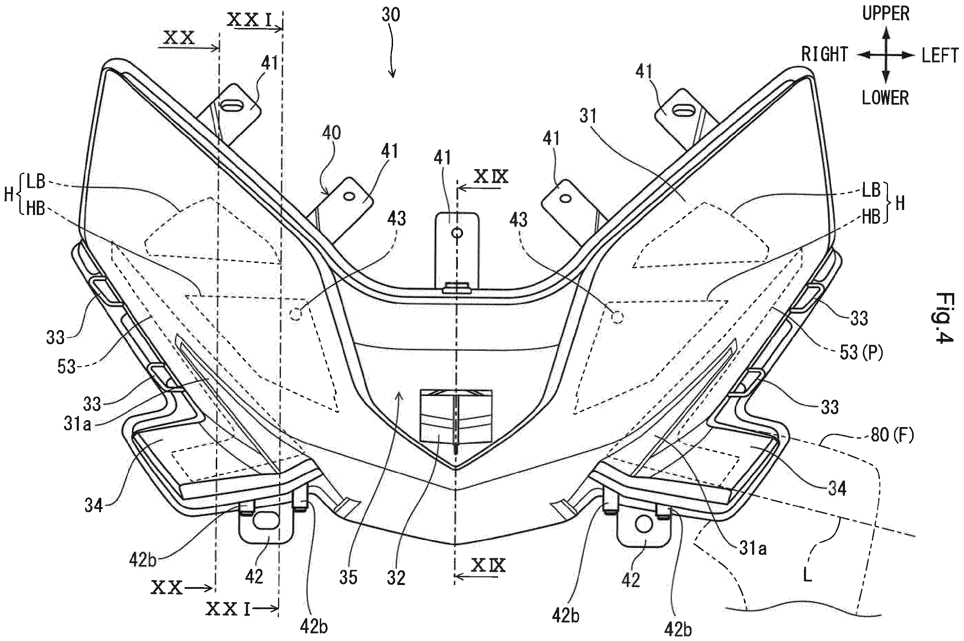

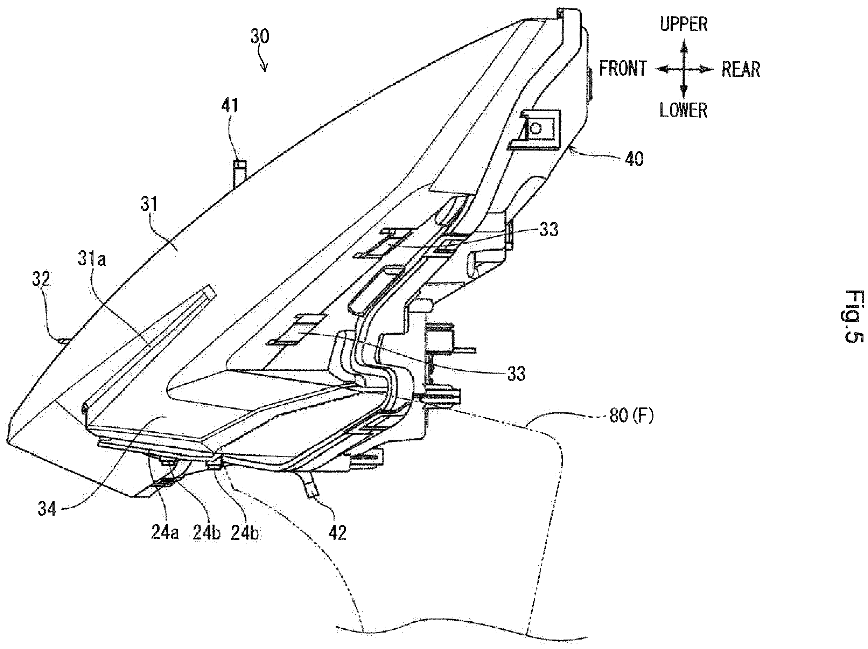

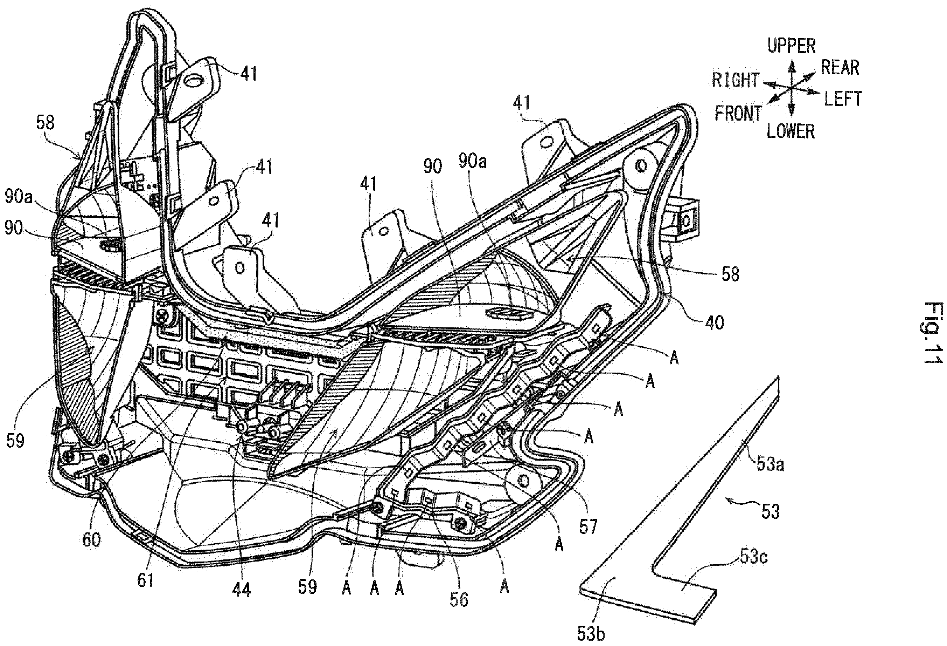

Fig. 4 is a front view of the headlight unit 30. Also, Fig. 5 is a left side view of the headlight unit 30. The headlight unit 30 is configured such that a single housing 40 accommodates: a pair of left and right low-beam reflectors (see Fig. 11) forming light-emission surfaces of the low beam headlights LB; a pair of left and right high-beam reflectors forming light-emission surfaces of the high beam headlights HB; and a pair of left and right inner lenses 53 forming the light-emission surfaces of the position lights P. The headlight unit 30 is also configured such that a colorless transparent outer lens 31 integrally covers the front of the housing 40.

The housing 40 is formed of colored resin and/or the like. Five upper fixing stays 41 are formed on the peripheral edge of the housing 40, and also a pair of left and right lower fixing stays 42 is formed on a lower portion of the peripheral edge of the housing 40. The upper fixing stays 41 are secured to the front cowl 12, while the lower fixing stays 42 are secured to the vehicle body. Further, engagement protrusions 33 are formed on both sides of the outer lens 31 to be engaged with the reverse side of the front cowl 12.

The vertical optical axis adjustment for the headlights H is able to be made by use of a pair of left and right pivotal shafts 43 as the swing center. The left and right pivotal shafts 43 are placed in positions overlapping the corresponding high beam headlights HB as viewed in the front view of the vehicle. A central recess 35 is formed at the center of the outer lens 31 in the vehicle width direction and in a position covered with the front cowl 12. The central recess 35 is offset toward the rear of the vehicle from the exposed surface of the headlight unit 30. An engagement portion 32 is provided in a downward location in the central recess 35 to be engaged with the reverse side of the front cowl 12. An engagement lug 24a and two cylindrical bosses 24b are formed on a lower portion of the outer lens 31. The engagement lug 24a is formed in order to attach the decorative member 24. The two cylindrical bosses 24b are engaged with fastening members not shown.

The inner lens 53 forming part of the position light P is formed in an approximately L shape with an upper long-length portion and a lower long-length portion. The upper long-length portion extends upward toward the outside in the vehicle width direction, and the lower long-length portion extends downward toward the outside in the vehicle width direction. A protrusion 31a is configured to be formed on the surface of the outer lens 31 in a shape corresponding with the shape of the upper long-length portion so that light emission through the upper long-length portion is made conspicuous.

A pair of left and right overhang portions 34 is provided in a downward location in the headlight unit 30, and the overhang portions 34 extend outward in the vehicle width direction. In the outer lens 31, a portion corresponding to the headlight H is shaped such that a curved surface is convex toward the front of the vehicle and the overall curved surface is inclined greatly rearward, while the overhang portion 34 is configured to be formed basically in a planer fashion. This results in new variable outer appearance. The lower long-length portion of the inner lens 53 extends along the overhanging direction of the overhang portion 34, so that the light-emission surface is formed along the outer shape of the outer lens 31.

In the embodiment, the headlight H and the position light P are placed to overlap each other in the vehicle width direction as viewed from the front of the vehicle, and the position light P and the flasher light F are placed to overlap each other in the vehicle width direction. Thus, the lighting device can be provided to produce integral light emission through a long range extending in the up-and-down direction of the vehicle, when the headlights H, the position lights P and the flasher lights F are turned on. This enables an enhancement in visual effects produced by the new radical design and also an improvement in conspicuity of the vehicle.

The flasher light F is placed in a position overlapping an extension line L extending along the inclination of the lower long-length portion of the inner lens 53. This makes it possible to provide a lighting device radically designed to have the light-emission surfaces continuously extending throughout from the lower long-length portion of the position light P to the flasher light F.

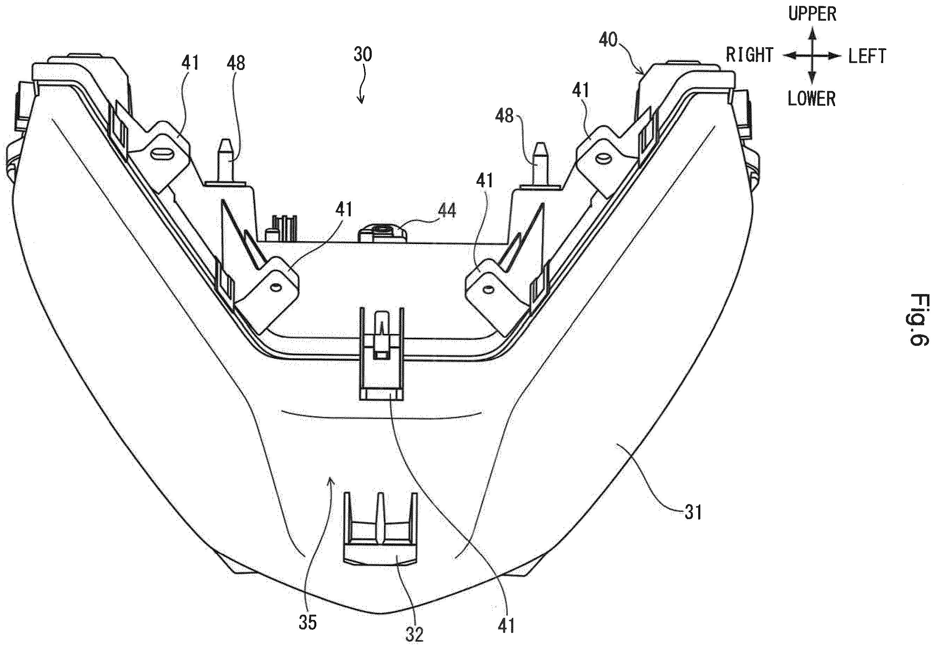

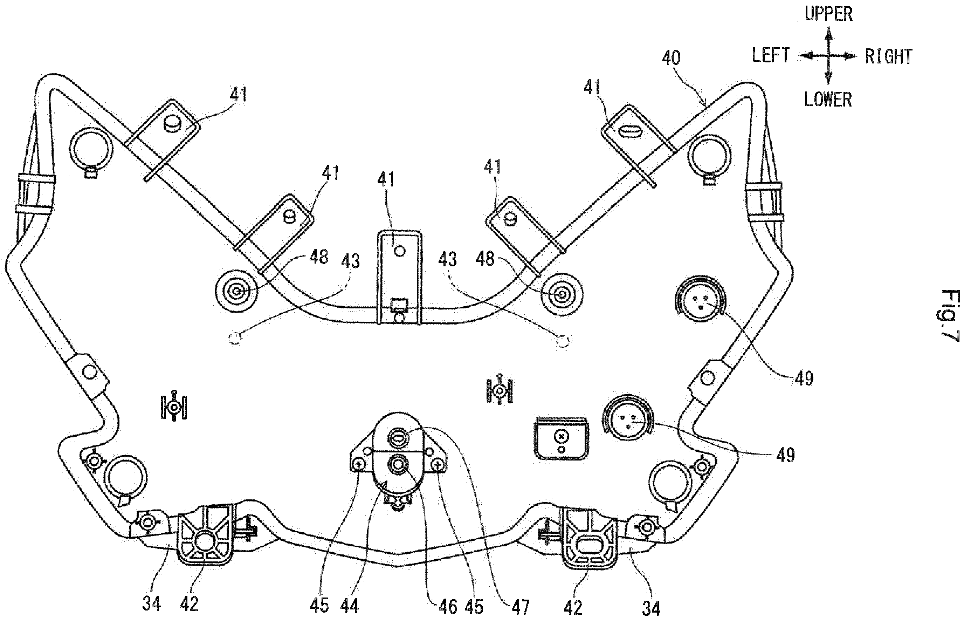

Fig. 6 is a top view of the headlight unit 30. Also, Fig. 7 is a back view of the headlight unit 30. A pair of left and right support protrusions 48 is formed on the backside of the housing 40. The support protrusions 48 are engaged with stay members to support the headlight unit 30. The stay members are coupled to the head pipe 11. Further, an optical axis adjustment mechanism 44 is attached to the center of the housing 40 in the vehicle width direction with two fastening members 45.

The optical axis adjustment mechanism 44 has an adjustment screw 46 and a coordinated screw 47. The adjustment screw 46 is accessed from under the headlight unit 30 in the front of the vehicle. The coordinated screw 47 is rotated in coordination with the adjustment screw 46. The vehicle's front end of the coordinated screw 47 is inserted through the housing 40 into the interior of the headlight unit 30. The pivotal shafts 43 for optical axis adjustment are located downward of the support protrusions 48 when the headlight unit 30 is viewed from back. Two lead-in ports 49 are provided on the right side in the vehicle width direction to route wiring for supply of electric power to the headlights H and the position lights P.

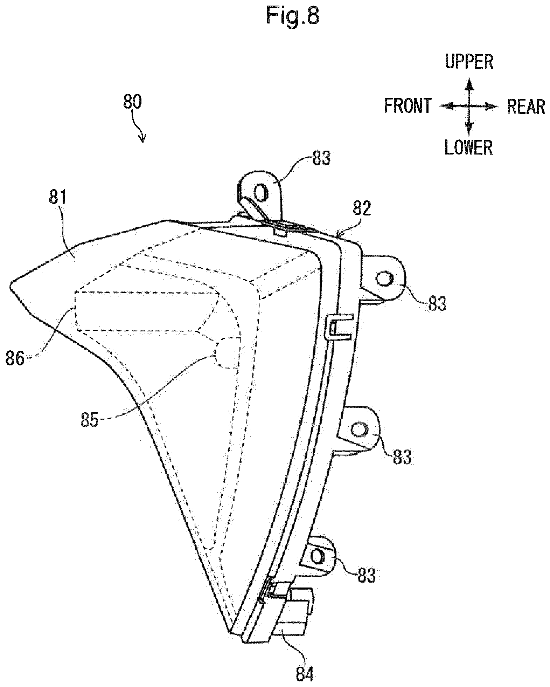

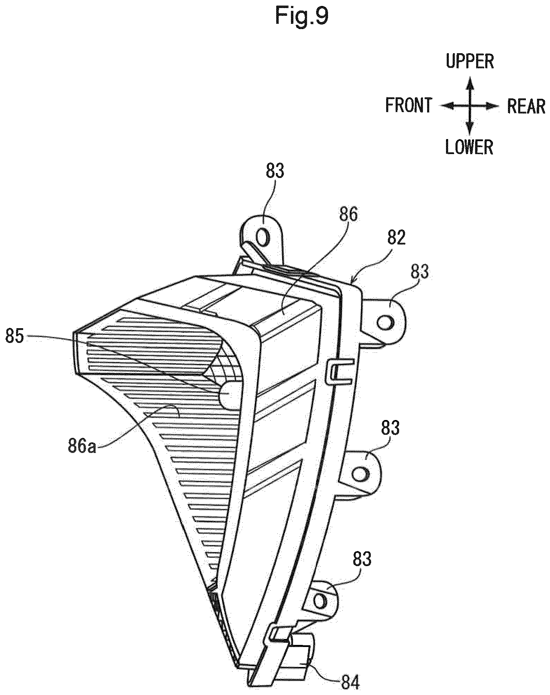

Fig. 8 is a left side view of the left flasher light unit 80 (the state when the vehicle is viewed from the left side). Also, Fig. 9 is a left side view of the state shown in Fig. 8 from which a flasher-light outer lens 81 is removed. The flasher light unit 80 is configured such that a flasher-light housing 82 accommodates a flasher-light reflector 86 and the flasher-light housing 82 is covered with the colorless transparent or colored transparent flasher-light outer lens 81. The flasher-light housing 82 is made of colored synthetic resin and/or the like. The flasher-light reflector 86 supports a flasher-light bulb 85. The flasher-light bulb 85 may include an incandescent lamp bulb or the like, and a colorless transparent flasher-light outer lens 81 may be used when the flasher-light bulb 85 used is orange, and an orange flasher-light outer lens 81 may be used when the flasher-light bulb 85 used is white.

Four fixing stays 83 and a fixing stay 84 are provided on a rear portion of the flasher-light housing 82. The four fixing stays 83 are engaged with the reverse side of the front cowl 12. The fixing stay 84 is secured together with the front cowl 12 and the corresponding front side cover 14 in a co-clamp manner. The illumination light emit from the flasher-light bulb 85 is reflected toward an area ahead of the vehicle by a reflector surface 86a of the flasher-light reflector 86, and the inner surface portion and the rear surface portion of the reflector surface 86a are cut in different patterns.

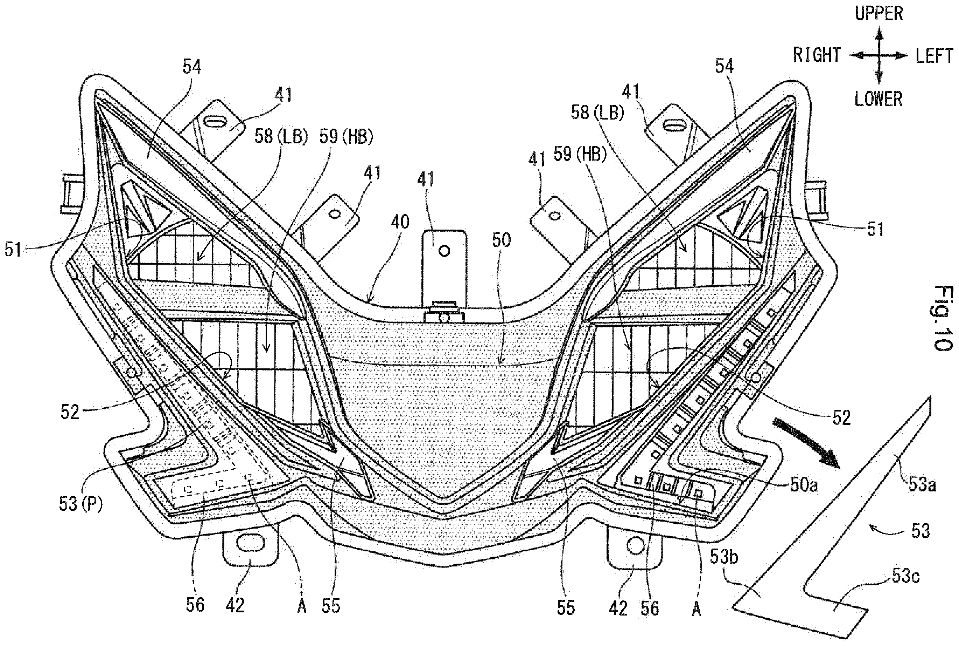

Fig. 10 is a front view of the state shown in Fig. 4 from which the outer lens 31 is removed. An extension member 50 is secured to the housing 40, and the extension member 50 is placed in proximity to the reverse side of the outer lens 31. The extension member 50 is made of colored resin and/or the like. The extension member 50 is formed with: a pair of left and right low-beam apertures 51 through which the respective low-beam reflectors 58 forming the light-emission surfaces of the low beam headlights LB are exposed; a pair of left and right high-beam apertures 52 through which the respective high-beam reflectors 59 forming the light-emission surfaces of the high beam headlights HB are exposed; and a pair of left and right position light apertures 50a into which the respective inner lenses 53 forming the light-emission surfaces of the position lights P are fitted.

Removing the inner lenses 53 from the extension member 50 causes third substrates 56 to be exposed from the position light apertures 50a. On the third substrates 56, position-light LED light sources A are mounted as a third LED light source. On each of the right and left third substrate 56, the nine position-light LED light sources A are mounted, and the third substrate 56 is configured to have an approximate L shape as viewed in the front view of the vehicle, and also to include a plurality of stair-shaped mounting sides formed in a shape corresponding to the shape of the headlight unit 30. The stair-shaped mounting sides are oriented toward the front of the vehicle. The inner lens 53 is formed of colorless transparent resin, colored transparent resin and/or the like, the inner lens 53 is formed in an approximate L shape, and the inner lens 53 is formed so that one end of the band-shaped upper long-length portion 53a and one end of the band-shaped lower long-length portion 53c are coupled at a bend portion 53b.

The position light P in accordance with the embodiment is configured to use the position-light LED light sources A to emit light through the overall inner lenses 53. And also, the position light P is configured such that, by moderating the lens cutting performed on the inner lens 53, granularity can be presented on the lighting manner in an area of the light source.

A first decorative lens 54 is provided on the upper side of the low-beam aperture 51, and is formed along the upper edge of the low-beam aperture 51. A second decorative lens 55 is provided on the lower side of the high-beam aperture 52 and is shaped as if an acute-angled, lower end of the high-beam aperture 52 is extended. The first decorative lens 54 and the second decorative lens 55 are formed of colored transparent resin, and are attached to no-aperture areas of the extension member 50. In particular, when establishing visual contact with the outside of the headlight unit 30 during the daytime, the first decorative lens 54 and the second decorative lens 55 serve as decorative accent in terms of appearance design when the headlight unit 30 is seen through the outer lens 31.

In the embodiment, the low-beam reflector 58 is placed to overlap a part of the position light P in the vehicle width direction as viewed in the front view of the vehicle. Because of this, even when the low beam headlights LB are turned on and the high beam headlights HB are turned off, the light-emission surfaces of the low beam headlights LB and the light-emission surfaces of the position lights P are continuously formed, and therefore improved conspicuity of the lighting device can be achieved.

Further, the inner lens 53 forms the light-emission surface of the position light P, and the upper long-length portion 53a of the inner lens 53 extends from at least the upper end of the high-beam reflector 59 to the lower end along the edge of the high-beam reflector 59 as viewed in the front view of the vehicle. Because of this, even when the low beam headlights LB are turned on and the high beam headlights HB are turned off, light is emitted also through an area along the edges of the high-beam reflectors 59 by the position lights P, and therefore further improved conspicuity of the lighting device can be achieved.

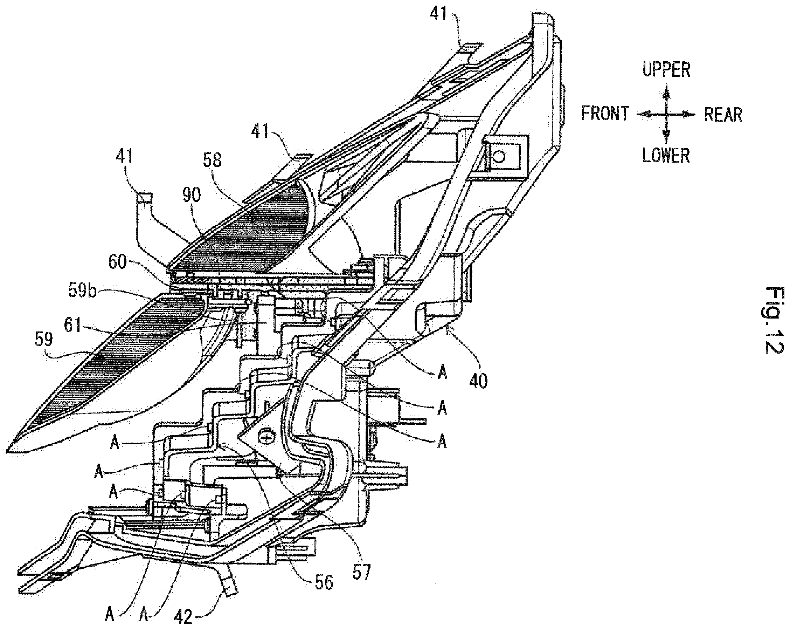

Fig. 11 is a perspective view of the headlight unit 30 from which the outer lens 31 and the extension member 50 are removed. Also, Fig. 12 is a left side view of the state shown in Fig. 11. The low-beam reflectors 58 and the high-beam reflectors 59 as a second reflector are attached on the right-hand and left-hand sides of a heatsink 60, the heatsink 60 being elongated in the vehicle width direction. A base member 61 is secured to a lower portion of the heatsink 60 to be engaged with the optical axis adjustment mechanism 44. Thus, by swinging the base member 61 about the above-described pivotal shafts 43 as the swing center, the heatsink 60 and all the four reflectors 58, 59 are integrally swung to achieve the vertical optical axis adjustment.

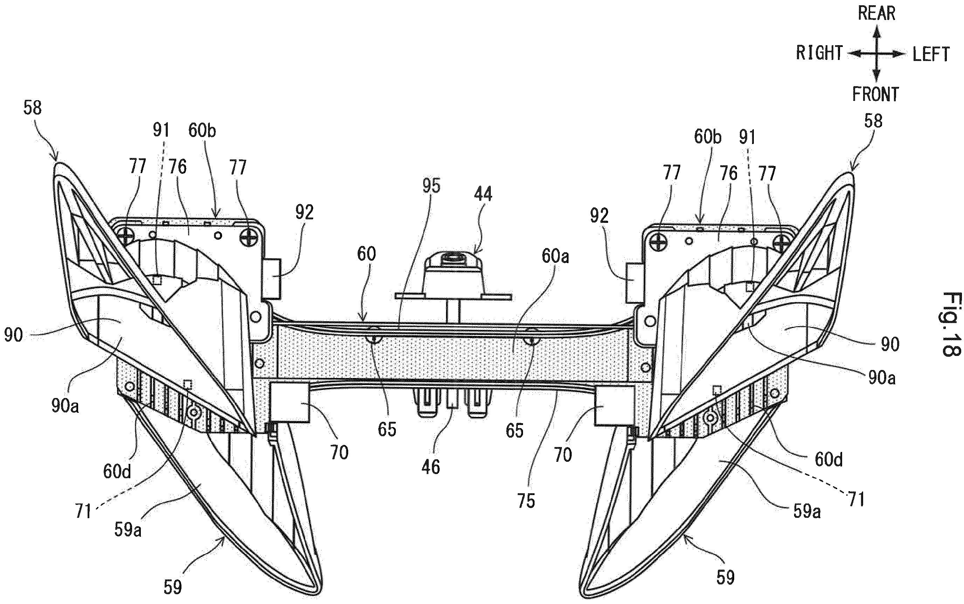

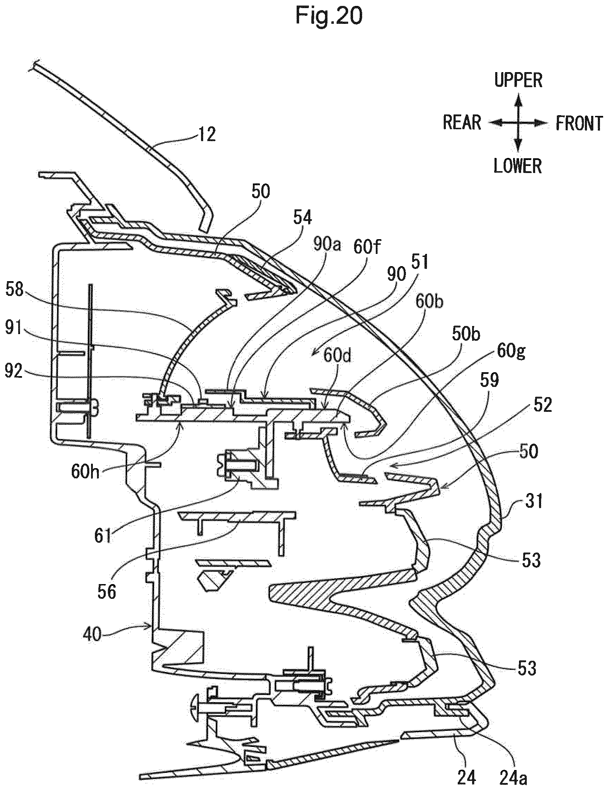

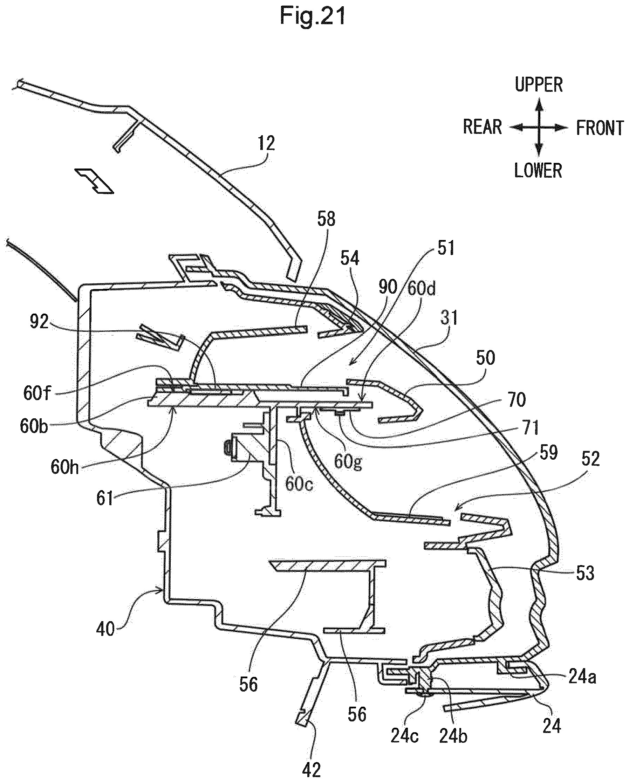

The low-beam reflector 58 is configured to have a decorative extension portion placed on an upper portion of a hemispherical reflection portion, and illumination light from a low-beam LED light source 91 (see Figs. 18, 20) is reflected off the hemispherical reflection portion to be directed toward an area ahead of the vehicle. The low-beam LED light source 91 is provided as a first LED light source for upward illumination. The high-beam reflector 59 is shaped to have a hemispherical reflection portion extending in a forward and downward direction of the vehicle, and illumination light from a high-beam LED light source 71 (see Figs. 20, 21) is reflected off the hemispherical reflection portion to be directed toward an area ahead of the vehicle. The high-beam LED light source 71 is provided as a second LED light source for downward illumination.

The low-beam reflector 58 is formed in a bottom-open shape without an underside underneath the hemispherical reflection portion. A blind plate 90 is attached to a portion of the top face of the heatsink 60, the portion corresponding to the location of the low-beam reflector 58. The blind plate 90 has a shade 90a. The shade 90a screens out the illumination light from the low-beam LED light source 91 in a predetermined range.

A pair of left and right plate-shaped LED drive circuit substrates 57 is provided and the left and right LED drive circuit substrates 57 are placed more outward in the vehicle width direction than the approximate-L-shaped, stairs-shaped third substrates 56, respectively.

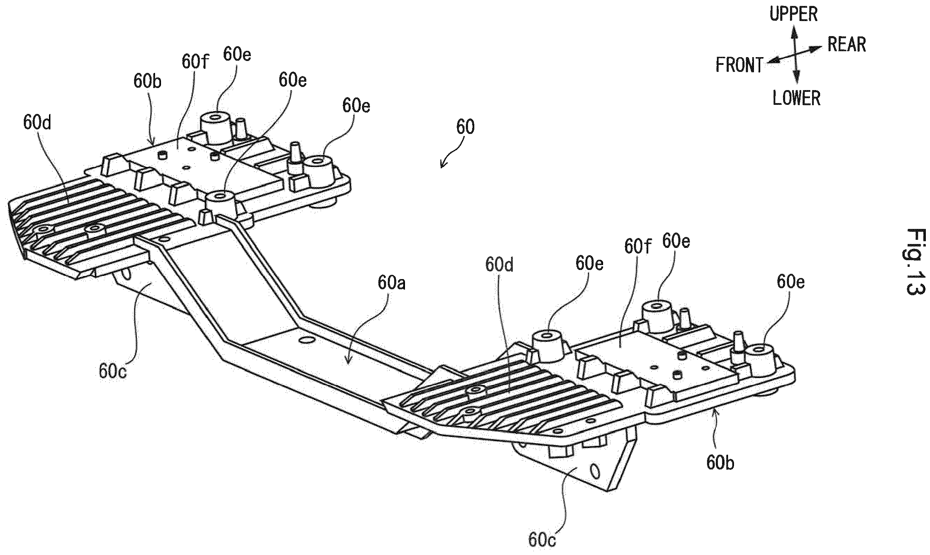

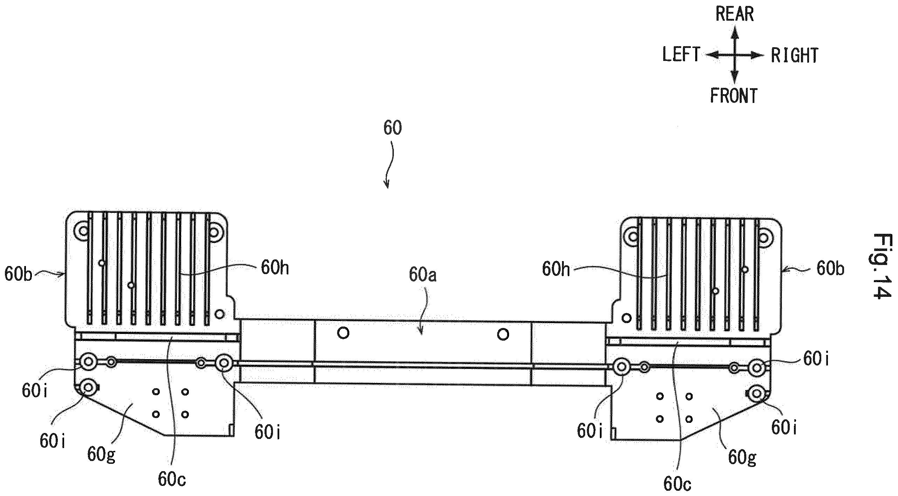

Fig. 13 is a perspective view of the heatsink 60. Also, Fig. 14 is a bottom view of the heatsink 60. The heatsink 60 is an integrally molded component made of metal such as aluminum and/or the like. The heatsink 60 has a pair of left and right plate-shaped portions 60b and a coupling portion 60a, the coupling portion 60a being located in an in-between position to couple the plate-shaped portions 60b to each other.

A first holding surface 60f is provided on the top face of each of the plate-shaped portions 60b, and the first holding surface 60f holds a first substrate 92 (see Figs. 18, 20) and the low-beam reflector 58, the light source of the low beam headlight LB being mounted on the first substrate 92. Bosses 60e are arranged around the first holding surface 60f in order to attach the blind plate 90 and the low-beam reflector 58. A plurality of first cooling fins 60d are formed forward of the first holding surface 60f, and the first cooling fins 60d are oriented in the vehicle longitudinal direction.

A second holding surface 60g is provided on the underside of the plate-shaped portion 60b, and the second holding surface 60g holds a second substrate 70 (see Figs. 18, 21) and the high-beam reflector 59, the light source for the high beam headlight HB being mounted on the second substrate 70. Bosses 60i are arranged around the second holding surface 60g in order to attach the high-beam reflector 59. A plurality of second cooling fins 60h are formed rearward of the second holding surface 60g and the second cooling fins 60h are oriented in the vehicle longitudinal direction. Further, a support plate 60c is formed on the underside of the plate-shaped portion 60b in order to secure the base member 61.

With the above structure, all the four, upper, lower, left and right, holding surfaces are provided on the single heatsink 60, and all the holding surfaces are able to be used to cool the four substrates. Further, the substrates are efficiently cooled on the top faces and undersides of the left and right plate-shaped portions 60b, while an increase in thermal capacity of the entire heatsink 60 can be achieved by the coupling portion 60a.

In the embodiment, the coupling portion 60a of the heatsink 60 is of approximate U shaped cross-section. This makes it possible to increase the stiffness of the coupling portion 60a extending in the vehicle width direction as well as to increase the thermal capacity of the heatsink 60.

Further, a plurality of the first cooling fins 60d is formed in a more forward position in the vehicle than the first holding surface 60f, and also a plurality of the second cooling fins 60h is formed in a more rearward position in the vehicle than the second holding surface 60g. Because of this, the cooling fins can be efficiently arranged suitably for the low-beam reflector 58 and the high-beam reflector 59, the reflectors 58 and 59 being offset from each other in the vehicle longitudinal direction. As a result, the cooling efficiency by the heatsink 60 can be improved.

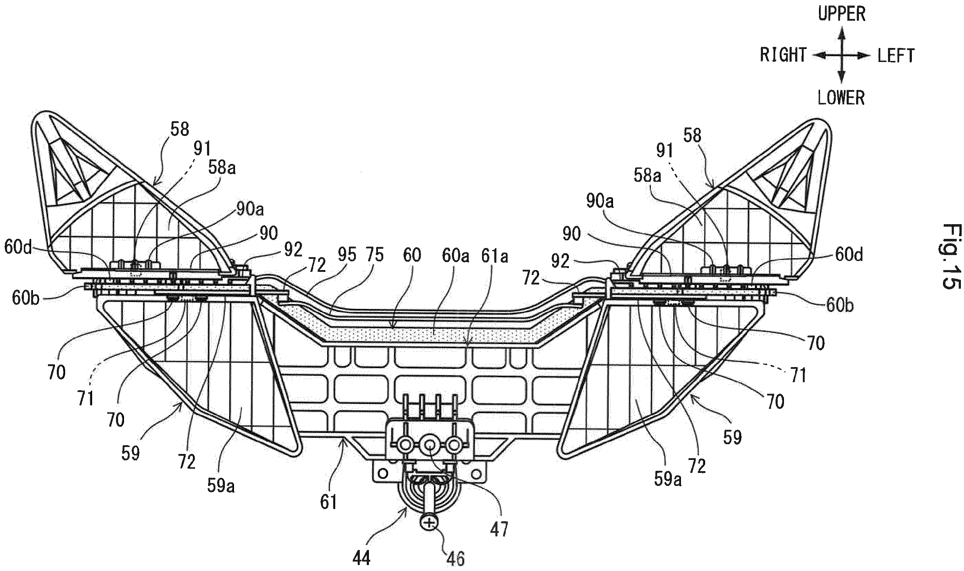

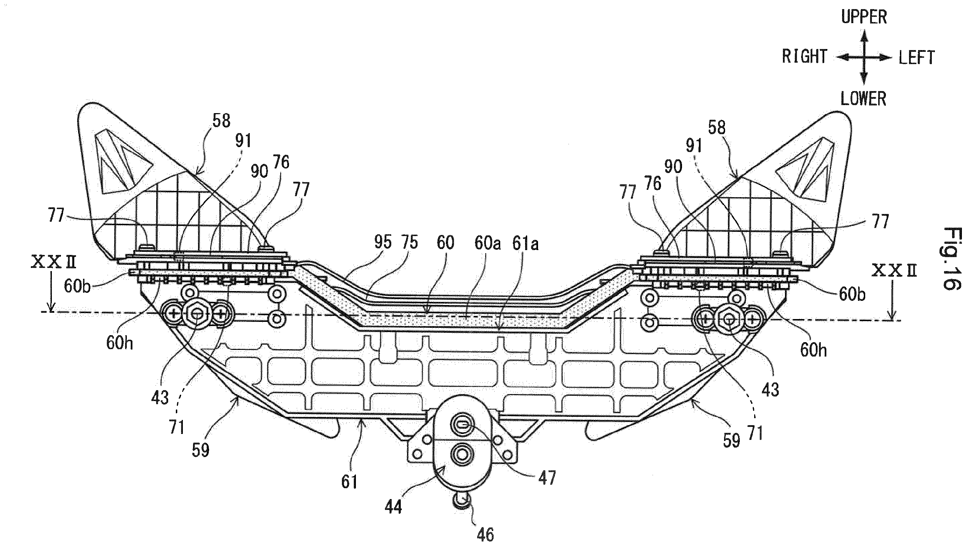

Fig. 15 is a front view of the state shown in Fig. 11 from which the housing 40 is removed. Also, Fig. 16 is a back view of the state shown in Fig. 13. The base member 61 is formed of colored resin and/or the like, and the base member 61 is secured to the lower side of the heatsink 60. The reflection surfaces of the low-beam reflector 58 and the high-beam reflector 59 are cut in pattern of multi-reflector specifications, and the cut pattern applied to the reflection surfaces is different from that applied to a side wall extending toward the front of the vehicle.

The coupling portion 60a of the heatsink 60 is formed in a convex shape protruding toward the bottom of the vehicle, while a concave portion 61a is formed on an upper portion of the base member 61 to correspond to the convex shape of the coupling portion 60a. Therefore, when the convex shape of the heatsink 60 and the concave portion 61a of the base member 61 are engaged with each other, the alignment between the components is provided clearly, so that the assembling operation is facilitated. Further, because the central portion of the heatsink 60 in the vehicle width direction is located at a lower level than the left and right plate-shaped portions 60b, the central portion of the headlight unit 30 in the vehicle width direction can be reduced in height dimension to achieve a reduction in physical size and weight. It is noted that first wiring 95 and second wiring 75 are routed in position in front and rear of the coupling portion 60a of the heatsink 60 in the vehicle longitudinal direction. The first wiring 95 is provided for electrical connection of the left and right first substrates 92. The second wiring 75 is provided for electrical connection of the left and right second substrates 70.

Further, additionally referring to Fig. 10, the lower long-length portion 53c of the position light P extends to a more inward position in the vehicle width direction than the high-beam LED light source 71. Therefore, even when the high beam headlights HB are turned off, the lower long-length portions 53c of the position lights P cause a light emission range to be widen to the more inward positions in the vehicle width direction than the high-beam LED light sources 71, and thus an enhancement in conspicuity of the vehicle is made possible.

As described earlier, the optical axis adjustment mechanism 44 is a mechanism by which the adjustment screw 46 is accessed from below in the front of the vehicle and the adjustment screw 46 is rotated with a tool such as a screwdriver or the like for back-and-forth swinging motion of the lower end of the base member 61 about the pivotal shafts 43 as the swing center. Therefore, it is possible to use the single heatsink 60 to cool the pairs of left and right first substrates 92 and left and right second substrates 70. In addition to this, since the optical axis adjustment mechanism 44 is mounted on the base member 61 attached to the heatsink 60, it is possible to use the single optical axis adjustment mechanism 44 to make the optical axis adjustment in the up-and-down directions of the vehicle on the pair of left and right headlights H. A plurality of ribs is formed on the front and rear faces of the base member 61 for the purpose of reducing the weight and improving the stiffness, and the pivotal shafts 43 are secured to the rear face of the base member 61 with fastening members.

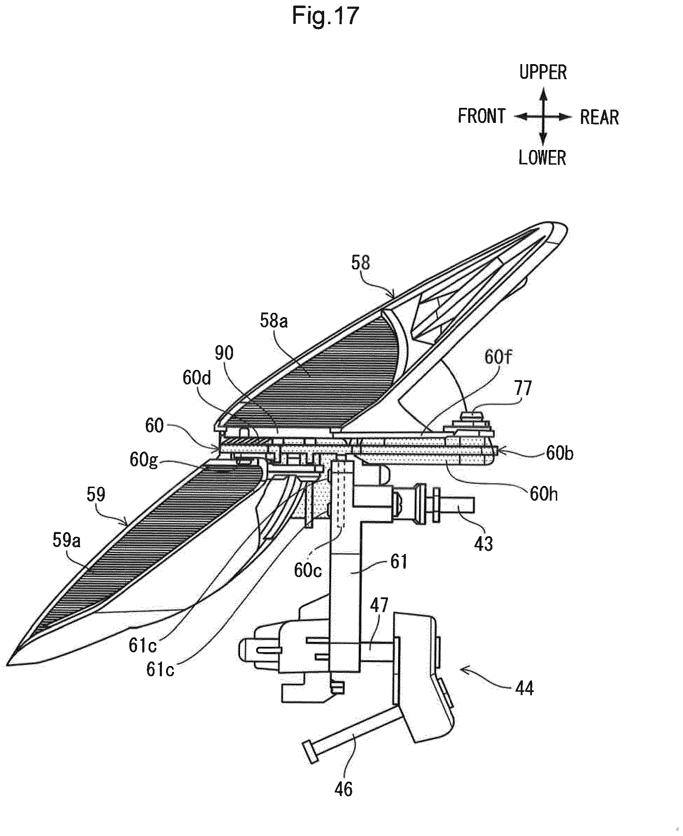

Fig. 17 is a left side view of the state shown in Fig. 15. Also, Fig. 18 is a top view of the state shown in Fig. 15. The heatsink 60 is secured to the base member 61 with fastening members 61c, the fastening members 61c passing through the support plate 60c. The blind plate 90, together with a flange 76, is secured to the top face of the plate-shaped portion 60b with fastening members 77, and the flange 76 extends rearward under the lower portion of the low-beam reflector 58, and the fastening members 77 are screwed with the bosses 60e.

As illustrated in Fig. 17, each of the pair of left and right pivotal shafts 43 is placed in a more rearward position in the vehicle than the high-beam reflector 59 as well as in a more downward position in the vehicle than the low-beam reflector 58. Thus, although an unutilized space is created behind the high-beam reflectors 59 and underneath the low-beam reflectors 58, effective use of the unutilized space can be made to provide the two pivotal shafts 43 necessary for stable swinging operation. This makes it possible to reduce the dimensions of the headlight unit 30 in the vehicle longitudinal direction.

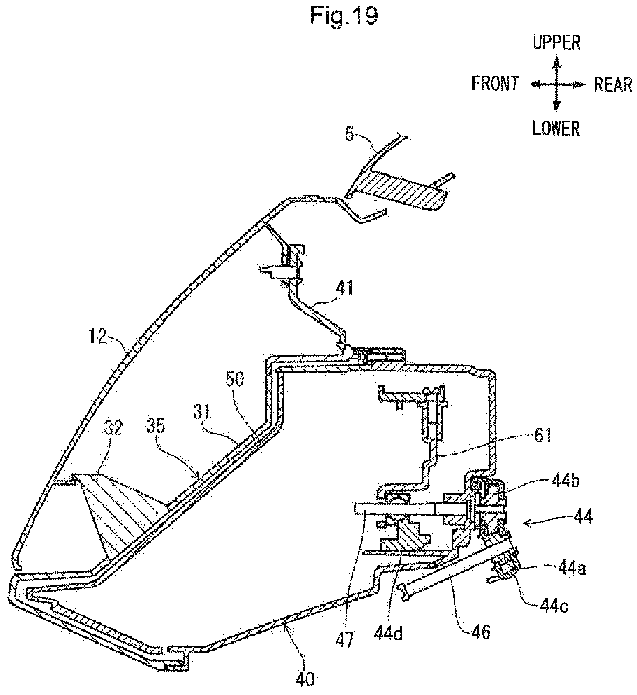

Fig. 19 is a sectional view taken along XIX-XIX line of Fig. 4. An input bevel gear 44a and an output bevel gear 44b are housed within a casing 44c of the optical axis adjustment mechanism 44. The input bevel gear 44a is secured to the adjustment screw 46. The output bevel gear 44b is meshed with the input bevel gear 44a. The coordinated screw 47 is secured to the output bevel gear 44b. With this structure, upon rotation of the adjustment screw 46 inclined in a forward and downward direction of the vehicle, the coordinated screw 47 oriented in the vehicle longitudinal direction rotates to move an inner ring 44d in the vehicle longitudinal direction. A female screw thread is formed in the inner ring 44d. The inner ring 44d is secured to the base member 61, and therefore the lower portion of the base member 61 is able to be moved in the front and rear directions about the pivotal shafts 43 as the swing center.

It is noted that the central recess 35 is offset toward the rear of the vehicle from the exposed surface of the outer lens 31 of the headlight unit 30, and unlike the exposed surface formed as a curved surface, the central recess 35 is formed in a flat shape along the shape of the extension member 50.

Fig. 20 is a sectional view taken along XX-XX line of Fig. 3 (Fig. 4). The plate-shaped portion 60b of the heatsink 60 is covered with a partition 50b in the up-and-down direction of the heatsink 60, so that the plate-shaped portion 60b is hidden from sight when the vehicle is viewed from the front. The partition 50b is installed between the low-beam aperture 51 from which the low-beam reflector 58 is exposed, and the high-beam aperture 52 from which the high-beam reflector 59 is exposed. The first substrate 92 on which the low-beam LED light source 91 is mounted is secured to the first holding surface 60f formed on the top face of the plate-shaped portion 60b, and the first substrate 92 is secured in a position on the rearward side of the plate-shaped portion 60b as well as in a position rearward and downward of the shade 90a of the blind plate 90.

Fig. 21 is a sectional view taken along XXI-XXI line of Fig. 3 (Fig. 4). The second substrate 70 on which the high-beam LED light source 71 is mounted is secured to the second holding surface 60g formed on the underside of the plate-shaped portion 60b, and the second substrate 70 is secured in a position on the forward side of the plate-shaped portion 60b. The decorative member 24 is attached to the lower portion of the outer lens 31, and after the decorative member 24 is engaged with the engagement lug 24a from the front side of the vehicle, the decorative member 24 is secured to the two cylindrical bosses 24b by screwing the fastening members 24c.

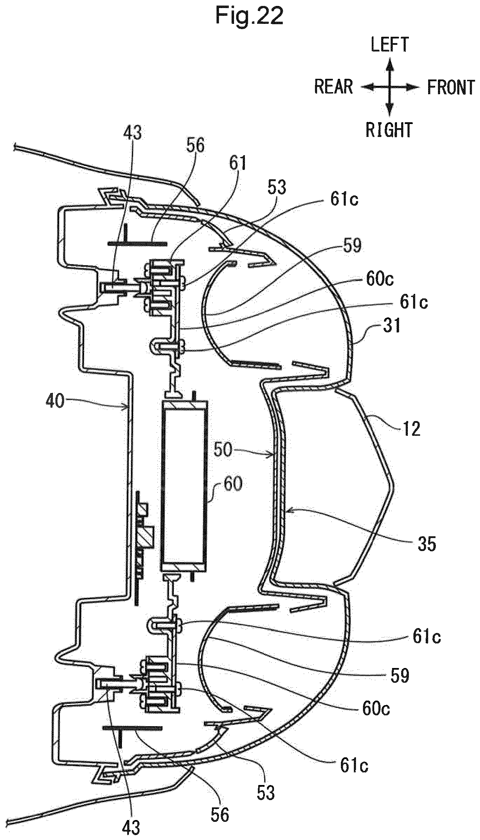

Fig. 22 is a sectional view taken along XXII-XXII line in Fig. 3 (Fig. 16). As described earlier, the pivotal shafts 43 for the optical axis adjustment are arranged as a pair at the right and left in the vehicle width direction, and the pivotal shafts 43 are secured to the housing 40 and are supported in a swingable manner for the base member 61. The central recess 35 is offset toward the rear of the vehicle from the exposed surface of the outer lens 31, and the central recess 35 is placed in proximity to a central portion in the vehicle width direction of the extension member 50.

Folded-back portions are provided respectively at an edge of the low-beam aperture 51 from which the low-beam reflector 58 is exposed, and at an edge of the high-beam aperture 52 from which the high-beam reflector 59 is exposed, in order to hide the edges of the respective reflectors 58, 59 from outside. The back wall of the housing 40 is placed in proximity to the heatsink 60 at the center in the vehicle width direction, so that the dimensions of the headlight unit 30 in the vehicle longitudinal direction are reduced.

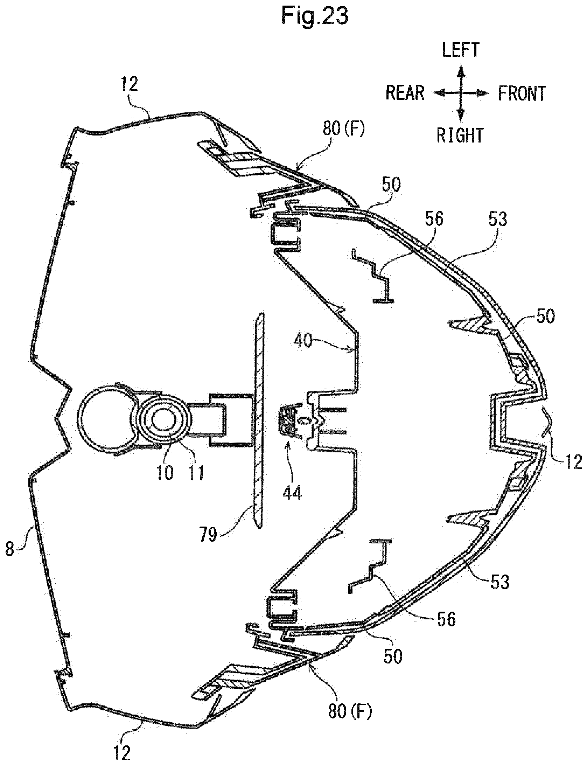

Fig. 23 is a sectional view taken along XXIII-XXIII line of Fig. 3. As described earlier, the flasher light F is placed in a position overlapping the extension line L, and the extension line L extends from the lower long-length portion 53c of the inner lens 53 forming part of the light emission surface of the position light P. Therefore, integral light emission can be provided throughout from the lower long-length portions 53c of the inner lenses 53 to the flasher light F, so that improved conspicuity of the lighting device can be achieved by the outward appearance having a long continuous light emission surface in the up-and-down direction of the vehicle. A stay 79 is attached to the front of the head pipe 11 in order to support the support protrusions 48 of the headlight unit 30 (see Figs. 6, 7), electrical components, and the like.

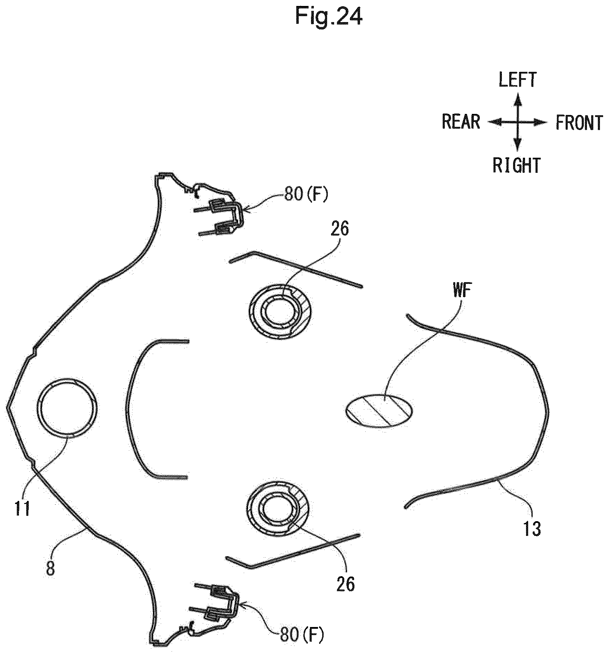

Fig. 24 is a sectional view taken along XXIV-XXIV line of Fig. 3. As viewed in the front view of the vehicle, the flasher lights F are placed to overlap, in the vehicle width direction, a part of the front fender 13 covering the front wheel WF of the motorcycle 1. This makes it possible to provide a lighting device producing integral light emission through a long continue range throughout from the vehicle's top end to the vehicle's bottom end overlapping the front fender, when each light is turned on. Further, additionally referring Fig. 2, in the embodiment, at least parts of the headlights H, the position lights P and the flasher lights F are configured to overlap the front fender 13 in the vehicle longitudinal direction as viewed in the side view of the vehicle, so that a long light emission surface is formed in the up-and-down direction of the vehicle when the vehicle is viewed from outside in the side view of the vehicle. This makes it possible to improve the conspicuity of the lighting device.

It should be noted that the shapes of the outer lens and the housing, the shapes of the headlight, the position light and the flasher light, the shapes of the low-beam reflector and the high-beam reflector, the shapes and materials of the heatsink and the base member, the structure of the optical axis adjustment mechanism, and the like are not limited to the above-described embodiment, but is limited by the scope of the appended claims. For example, the light source of the flasher light may be structured by use of LED, and the headlight unit and the flasher light unit may be configured integrally with each other. Further, the high-beam reflectors may be placed on the upper side so that the low-beam reflectors may be placed under the high-beam reflectors. The lighting device for a vehicle in accordance with the present invention may be applied to saddled three-/four-wheeled vehicles and the like, rather than motorcycles.

### [Explanation of sign]

- 1: motorcycle (vehicle)
- 31: outer lens
- 40: housing
- 43: pivotal shafts
- 44: optical axis adjustment mechanism
- 50: extension member
- 53: inner lenses
- 53a: upper long-length portion
- 53b: bend portion
- 53c: lower long-length portions
- 58: low-beam reflector (first reflector)
- 59: high-beam reflector (second reflector)
- 56: third substrates
- 60: heatsink
- 60a: coupling portion
- 60h: second cooling fins
- 61: base member
- 70: second substrate
- 71: high-beam LED light source
- 80: flasher light unit
- 91: first substrate
- 92: low-beam LED light source
- A: third LED light source
- H: headlights
- LB: low beam headlight
- HB: high beam headlight
- P: position lights
- F: flasher lights

## Claims

1. A lighting device for a motorcycle or a saddled three-/four-wheeled vehicle comprising:
a pair of left and right headlights (H) configured to be placed on a front portion of a vehicle (1);
a pair of left and right position lights (P) configured to be placed on the front portion of the vehicle (1), the position lights (P) being situated underneath the headlights (H); and
a pair of left and right flasher lights (F) configured to be placed on the front portion of the vehicle (1), the flasher lights (F) being situated underneath the position lights (P),
wherein the headlights (H) and the position lights (P) are placed to overlap each other in a vehicle width direction as viewed in a front view of the vehicle, and
the position lights (P) and the flasher lights (F) are placed to overlap each other in the vehicle width direction as viewed in a front view of the vehicle, and **characterized in that** the pair of left and right flasher lights (F) are placed in outward lower portions of the lighting device in the vehicle width direction, so that when the vehicle is seen from the front of the vehicle and the sides of the vehicle, light-emission surfaces of the headlights (H) and the position lights (P) and light-emission surfaces of the flasher lights (F) are continuously formed.

2. The lighting device for a motorcycle or saddled three-/four-wheeled vehicle according to claim 1, wherein the flasher lights (F) are placed to overlap, in the vehicle width direction, a part of a front fender (13) as viewed in a front view of the vehicle, the front fender (13) covering a front wheel (WF) of the vehicle (1).

3. The lighting device for a motorcycle or a saddled three-/four-wheeled vehicle according to claim 1 or claim 2,
wherein each of the position lights (P) includes an inner lens (53) serving as a light emission surface, the inner lens (53) being formed in an approximate L shape, the inner lens (53) being formed so that one end of a band-shaped upper long-length portion (53a) and one end of a band-shaped lower long-length portion (53c) are coupled at a bend portion (53b),
the lower long-length portion (53c) is inclined downward toward the outside in the vehicle width direction as viewed in a front view of the vehicle, and
each of the flasher lights (F) has a portion placed on an extension line (L) extending along a longitudinal direction of the lower long-length portion (53c).

4. The lighting device for a motorcycle or a saddled three-/four-wheeled vehicle according to claim 3,
wherein the headlights (H) are housed in a single housing (40), and
the headlights (H) are arranged side by side in the vehicle width direction to create spacing between the headlights (H) and the spacing is covered with a front cowl (12) serving as an exterior component of the vehicle (1).

5. The lighting device for a motorcycle or a saddled three-/four-wheeled vehicle according to claim 3 or claim 4,
wherein each of the headlights (H) has a low-beam reflector (58) on a vehicle upper side and a high-beam reflector (59) on a vehicle lower side, and
the low-beam reflector (58) is placed to overlap a part of the position light (P) in the vehicle width direction as viewed in the front side of the vehicle.

6. The lighting device for a motorcycle or a saddled three-/four-wheeled vehicle
according to claim 5, wherein the upper long-length portion (53a) of the position light (P) extends from at least an upper end of the high-beam reflector (59) to a lower end along an edge of the high-beam reflector (59) as viewed in the front side of the vehicle.

7. The lighting device for a motorcycle or a saddled three-/four-wheeled vehicle according to claim 5 or claim 6, wherein the
lower long-length portion (53c) of the position light (P) extends to a more inward position in the vehicle width direction than a high-beam light source (71) from which illumination light emitted is reflected off the high-beam reflector (59).

## Patentansprüche

1. Beleuchtungsvorrichtung für ein Motorrad oder ein drei-/vierrädriges Sattelfahrzeug, umfassend:
ein Paar linker und rechter Scheinwerfer (H), die gestaltet sind, an einem vorderen Abschnitt eines Fahrzeugs (1) platziert zu werden;
ein Paar linker und rechter Positionslichter (P), die gestaltet sind, an dem vorderen Abschnitt des Fahrzeugs (1) platziert zu werden, wobei die Positionslichter (P) unterhalb der Scheinwerfer (H) gelegen sind; und
ein Paar linker und rechter Blinklichter (F), die gestaltet sind, an dem vorderen Abschnitt des Fahrzeugs (1) platziert zu werden, wobei die Blinklichter (F) unterhalb der Positionslichter (P) liegen,
wobei die Scheinwerfer (H) und die Positionslichter (P) platziert sind, um einander in einer Fahrzeugbreitenrichtung bei Betrachtung in einer Vorderansicht des Fahrzeugs zu überlagern, und
die Positionslichter (P) und die Blinklichter (F) platziert sind, um einander in der Fahrzeugbreitenrichtung bei Betrachtung in einer Vorderansicht des Fahrzeugs zu überlagern, und
**dadurch gekennzeichnet, dass**
das Paar linker und rechter Blinklichter (F) an äußeren tieferen Abschnitten der Beleuchtungsvorrichtung in der Fahrzeugbreitenrichtung platziert ist, sodass, wenn das Fahrzeug von der Vorderseite des Fahrzeugs und den Seiten des Fahrzeugs betrachtet wird, Leuchtflächen der Scheinwerfer (H) und der Positionslichter (P) und Leuchtflächen der Blinklichter (F) kontinuierlich gebildet sind.

2. Beleuchtungsvorrichtung für ein Motorrad oder ein drei-/vierrädriges Sattelfahrzeug nach Anspruch 1, wobei die Blinklichter (F) platziert sind, um, in der Fahrzeugbreitenrichtung, einen Teil eines Vorderkotflügels (13) bei Betrachtung in einer Vorderansicht des Fahrzeugs zu überlagern, wobei der Vorderkotflügel (13) ein Vorderrad (WF) des Fahrzeugs (1) bedeckt.

3. Beleuchtungsvorrichtung für ein Motorrad oder ein drei-/vierrädriges Sattelfahrzeug nach Anspruch 1 oder Anspruch 2,
wobei jedes der Positionslichter (P) eine Innenlinse (53) beinhaltet, die als Leuchtfläche dient, wobei die Innenlinse (53) annähernd in L-Form gebildet ist, wobei die Innenlinse (53) so gebildet ist, dass ein Ende eines bandförmigen oberen Längsabschnitts (53a) und ein Ende eines bandförmigen unteren Längsabschnitts (53c) an einem Krümmungsabschnitt (53b) gekoppelt sind,
wobei der untere Längsabschnitt (53c) bei Betrachtung in einer Vorderansicht des Fahrzeugs nach unten zu der Außenseite in der Fahrzeugbreitenrichtung geneigt ist und
jedes der Blinklichter (F) einen Abschnitt aufweist, der auf einer Verlängerungslinie (L) platziert ist, die sich entlang einer Längsrichtung des unteren Längsabschnitts (53c) erstreckt.

4. Beleuchtungsvorrichtung für ein Motorrad oder ein drei-/vierrädriges Sattelfahrzeug nach Anspruch 3,
wobei die Scheinwerfer (H) in einem einzelnen Gehäuse (40) aufgenommen sind und
die Scheinwerfer (H) Seite an Seite in der Fahrzeugbreitenrichtung angeordnet sind, um Abstand zwischen den Scheinwerfern (H) zu bilden, und der Abstand mit einer vorderen Haube (12) bedeckt ist, die als eine Außenkomponente des Fahrzeugs (1) dient.

5. Beleuchtungsvorrichtung für ein Motorrad oder ein drei-/vierrädriges Sattelfahrzeug nach Anspruch 3 oder Anspruch 4,
wobei jeder der Scheinwerfer (H) einen Abblendlichtreflektor (58) an einer oberen Fahrzeugseite und einen Fernlichtreflektor (59) an einer unteren Fahrzeugseite aufweist; und
der Abblendlichtreflektor (58) platziert ist, um einen Teil des Positionslicht (P) in der Fahrzeugbreitenrichtung bei Betrachtung in der Vorderseite des Fahrzeugs zu überlagern.

6. Beleuchtungsvorrichtung für ein Motorrad oder ein drei-/vierrädriges Sattelfahrzeug nach Anspruch 5, wobei der obere Längsabschnitt (53a) des Positionslichts (P) sich von mindestens einem oberen Ende des Fernlichtreflektors (59) zu einem unteren Ende entlang eines Rands des Fernlichtreflektors (59) bei Betrachtung in der Vorderseite des Fahrzeugs erstreckt.

7. Beleuchtungsvorrichtung für ein Motorrad oder ein drei-/vierrädriges Sattelfahrzeug nach Anspruch 5 oder Anspruch 6, wobei der untere Längsabschnitt (53c) des Positionslichts (P) sich zu einer weiter innen liegenden Position in der Fahrzeugbreitenrichtung erstreckt als eine Fernlichtquelle (71), deren ausgestrahltes Beleuchtungslicht vom Fernlichtreflektor (59) reflektiert wird.

## Revendications

1. Dispositif d'éclairage pour une motocyclette ou un véhicule à trois/quatre roues à selle comprenant :
une paire de phares gauche et droit (H) configurés pour être placés sur une partie avant d'un véhicule (1) ;
une paire de feux de position gauche et droit (P) configurés pour être placés sur la partie avant du véhicule (1), les feux de position (P) étant situés sous les phares (H) ; et
une paire de clignotants gauche et droit (F) configurés pour être placés sur la partie avant du véhicule (1), les clignotants (F) étant situés sous les feux de position (P),
dans lequel les phares (H) et les feux de position (P) sont placés pour se chevaucher dans une direction de largeur de véhicule en regardant dans une vue avant du véhicule, et
les feux de position (P) et les clignotants (F) se chevauchent dans la direction de largeur de véhicule en regardant dans une vue avant du véhicule, et
**caractérisé en ce que**
la paire de clignotants gauche et droit (F) sont placés dans des parties inférieures extérieures du dispositif d'éclairage dans la direction de largeur du véhicule, de sorte que lorsque le véhicule est vu depuis l'avant du véhicule et les côtés du véhicule, des surfaces d'émission de lumière des phares (H) et des feux de position (P) et des surfaces d'émission de lumière des clignotants (F) sont formées de manière continue.

2. Dispositif d'éclairage pour une motocyclette ou un véhicule à trois/quatre roues à selle selon la revendication 1, dans lequel les clignotants (F) sont placés pour chevaucher, dans la direction de largeur de véhicule, une partie d'un garde-boue avant (13) en regardant dans une vue avant du véhicule, le garde-boue avant (13) recouvrant une roue avant (WF) du véhicule (1).

3. Dispositif d'éclairage pour une motocyclette ou un véhicule à trois/quatre roues à selle selon la revendication 1 ou la revendication 2,
dans lequel chacun des feux de position (P) inclut une lentille intérieure (53) servant de surface d'émission de lumière, la lentille intérieure (53) étant formée en une forme approximative de L, la lentille intérieure (53) étant formée de telle sorte qu'une extrémité d'une partie de grande longueur en forme de bande supérieure (53a) et une extrémité d'une partie de grande longueur en forme de bande inférieure (53c) sont couplées au niveau d'une partie coudée (53b),
la partie de grande longueur inférieure (53c) est inclinée vers le bas vers l'extérieur dans la direction de largeur de véhicule en regardant dans une vue avant du véhicule, et
chacun des clignotants (F) a une partie placée sur une ligne d'extension (L) s'étendant le long d'une direction longitudinale de la partie de grande longueur inférieure (53c).

4. Dispositif d'éclairage pour une motocyclette ou un véhicule à trois/quatre roues à selle selon la revendication 3,
dans lequel les phares (H) sont logés dans un boîtier unique (40), et
les phares (H) sont agencés côte à côte dans la direction de largeur de véhicule pour créer un espacement entre les phares (H) et l'espacement est recouvert d'un capot avant (12) servant de composant extérieur du véhicule (1).

5. Dispositif d'éclairage d'une motocyclette ou d'un véhicule à trois/quatre roues à selle selon la revendication 3 ou la revendication 4,
dans lequel chacun des phares (H) a un réflecteur de feux de croisement (58) sur un côté supérieur de véhicule et un réflecteur de feux de route (59) sur un côté inférieur de véhicule, et
le réflecteur de feux de croisement (58) est placé pour chevaucher une partie du feu de position (P) dans la direction de largeur de véhicule, en regardant dans le côté avant du véhicule.

6. Dispositif d'éclairage d'une motocyclette ou d'un véhicule à trois/quatre roues à selle selon la revendication 5, dans lequel la partie de grande longueur supérieure (53a) du feu de position (P) s'étend d'au moins une extrémité supérieure du réflecteur de feux de route (59) à une extrémité inférieure le long d'un bord du réflecteur de feux de route (59) en regardant dans le côté avant du véhicule.

7. Dispositif d'éclairage d'une motocyclette ou d'un véhicule à trois/quatre roues à selle selon la revendication 5 ou la revendication 6, dans lequel la partie de grande longueur inférieure (53c) du feu de position (P) s'étend vers une position plus vers l'intérieur dans la direction de largeur de véhicule qu'une source de lumière de feux de route (71) à partir de laquelle de la lumière d'éclairage émise est réfléchie par le réflecteur de feux de route (59).
